# FASCICULE DE BREVET EUROPEEN

(11) **EP 1 067 016 B1**
(45) Date de publication et mention de la délivrance du brevet: **23.05.2007**
(21) Numéro de dépôt: 00401841.2
(22) Date de dépôt: 28.06.2000
(51) Int. Cl.: B60N 2/48, B60N 2/26, B60N 2/44

(54) **Appui-tête convertible**
Veränderbare Kopfstütze
Convertible headrest

(30) Priorité: 08.07.1999 FR 9908850
(43) Date de publication de la demande: 10.01.2001
(73) Titulaire: CENTRE D'ETUDE ET RECHERCHE POUR L'AUTOMOBILE ( CERA), 51100 Reims (FR)
(72) Inventeur: Bieven, Franck, 75012 Paris (FR); Le Gall, François, 02130 Coulonges (FR)
(74) Mandataire: Sayettat, Julien Christian

(56) Documents cités:
- EP-A- 0 751 033
- EP-A- 0 803 398
- DE-A- 2 807 064
- DE-A- 3 023 140
- FR-A- 2 689 825
- FR-A- 2 726 517
- FR-A- 2 739 813
- GB-A- 2 302 268
- JP-A- 10 000 972

## Description

La présente invention concerne un appui-tête convertible par simple manipulation pour une utilisation enfant ou adulte, notamment dans un véhicule automobile.

Le problème de la sécurité des occupants des véhicules automobiles se pose de façon particulièrement cruciale en ce qui concerne les enfants. En effet, sur la plupart des véhicules, ni les sièges, ni les appuis-tête, ni le trajet des ceintures de sécurité ne sont adaptés à leur taille.

Pour ce qui est des enfants dits de groupe de masse 0 et 0+, d'un poids inférieur à 13kg, la réglementation impose l'utilisation de dispositifs de retenue de classe "intégrale" tels que sièges de sécurité enfant, porte-bébé ou nacelles, possédant leurs propres sangles de sécurité, dispositifs que, lorsqu'ils ne sont pas intégrés, l'on pose sur les sièges ou banquettes du véhicule en position face vers l'arrière ou en travers par rapport à la route et que l'on arrime par tout moyen convenable, par exemple à l'aide des ceintures de sécurité du véhicule ou de systèmes d'ancrage spécifiques lorsque le véhicule en est pourvu.

Pour les enfants des groupes de masse I, II et III, d'un poids compris entre 13kg et 36kg, la réglementation autorise l'installation de l'enfant face vers l'avant et l'utilisation de dispositifs de retenue dits de classe "non intégrale".

On connaît des sièges de véhicule automobile pour adulte comportant des moyens d'adaptation pour les rendre utilisables par un enfant, comme décrits dans les documents DE-A-28 07 064, JP-A-10 000972, FR-A-2 726 517, EP-A-0 803 398. Plus particulièrement, le document JP-A-10 000972 décrit un appui-tête ayant les caractéristiques du préambule de la revendication 1. Cet appui-tête est convertible pour une utilisation par un enfant ou un adulte, notamment dans un véhicule automobile, comprenant un support et un rabat articulé sur le support autour d'un axe sensiblement horizontal, d'une position haute d'utilisation par un adulte à une position basse d'utilisation par un enfant, ledit rabat comportant un corps d'appui généralement plat présentant sur une de ses faces une surface d'appui-tête pour adulte et sur son autre face une surface d'appui-tête pour enfant.

Toutefois, l'architecture de ces sièges est souvent complexe et onéreuse. C'est pourquoi peu de constructeurs de véhicule proposent des dispositifs de retenue intégrés. En ce qui concerne le rabat du document JP-A-10 000972, sa fonction principale est de venir combler tout ou partie d'un logement aménagé dans un dossier de siège, laissé vide après rabattement d'une partie de ce dossier formant coussin d'appoint. Ce rabat n'apporte rien en matière de sécurité ni de réglage de confort.

On a donc le plus souvent recours à des accessoires qui doivent pour la plupart être démontés pour une utilisation du siège par un adulte.

Dans leur version la plus simple, ces dispositifs sont constitués d'un coussin d'appoint qui rehausse l'enfant et permet d'envisager l'utilisation directe des ceintures de sécurité du véhicule en assurant, par un système de guides, un placement correct du brin de sangle ventral de celles-ci, en position sous-abdominale, au-dessus des cuisses, car les os du bassin des enfants de moins de dix ans ne sont pas encore soudés.

Mais de tels moyens ne peuvent assurer à eux seuls le confort et la sécurité de l'enfant. En effet, et surtout pour les plus petits d'entre eux, dont la tête se trouve largement sous la zone d'appui-tête adulte, le brin de sangle diagonal est gênant, car il leur cisaille le cou, et ils ont tendance de s'en échapper volontairement ou non, par manque de maintiens latéraux, notamment lorsqu'ils s'assoupissent, se plaçant ainsi en position d'insécurité.

Un accessoire complémentaire de type "sangle guide", qui crée un lien supplémentaire entre les brins de sangles sous abdominale et diagonale, peut alors servir à dévier le trajet du brin diagonal pour le forcer à passer sur l'épaule de l'enfant mais n'empêche pas celui-ci de s'affaisser.

D'autres accessoires de type "têtière", tels que décrit dans le document FR-A-2 739 813, sont susceptibles d'assurer un maintien latéral de la tête d'un enfant et de dévier le brin diagonal de la ceinture. On notera que les formes de ces accessoires empêcheront difficilement les enfants de s'affaisser du coté opposé au brin diagonal de ceinture, car elles ne sont pas assez enveloppantes à cette fin.

Le document GB-A-2 302 268 décrit une têtière associée à un coussin d'appui-tête, mais ce dispositif n'est pas utilisable par un enfant.

D'autres systèmes plus perfectionnés, tels que décrits dans le document EP-A-0 751 033, comprennent un dosseret encliqueté assez librement pour s'adapter aux différentes inclinaisons de dossier, à l'arrière d'un coussin du type précité, et comportent généralement des appuis latéraux qui peuvent être réglables en écartement, pour le torse et la tête, ainsi que des renvois réglables améliorant le positionnement de la ceinture sur l'épaule de l'enfant. De tels systèmes présentent toutefois certains défauts en cas d'accident. En effet, en se tendant sous l'effet des prétensionneurs, le brin de ceinture dévié entraîne le dosseret en rotation. De surcroît, l'épaisseur de dosseret qui conditionne la position longitudinale de l'enfant dans le véhicule et l'inertie dudit dosseret sont préjudiciables car le torse de l'enfant et, par voie de conséquence, sa tête seront projetés plus en avant en cas d'accident.

Enfin, on peut avoir besoin de tels accessoires occasionnellement et ne pas en disposer au moment voulu, soit parce qu'on en a pas fait l'acquisition, soit parce qu'aussi encombrants qu'inesthétiques, on a tendance à les ôter le plus souvent possible.

La présente invention vise à pallier ces inconvénients.

A cet effet, l'invention a pour objet un appui-tête convertible pour une utilisation par un enfant ou un adulte, notamment dans un véhicule automobile, comprenant un support et un rabat articulé sur le support autour d'un axe sensiblement horizontal situé au bord inférieur du support, ledit rabat étant déplaçable d'une position haute d'utilisation par un adulte à une position basse d'utilisation par un enfant, ledit rabat comportant un corps d'appui généralement plat présentant sur une de ses faces une surface d'appui-tête pour adulte et sur son autre face une surface d'appui-tête pour enfant, caractérisé par le fait que ledit rabat comporte deux joues latérales sensiblement verticales s'étendant à partir des bords du corps d'appui du côté de sa face présentant la surface d'appui-tête pour enfant, et par le fait que le corps d'appui et les deux joues latérales sont complémentaires dudit support de manière à s'emboîter autour du support lorsque le rabat est en position haute d'utilisation par un adulte.

Le rabat constitue donc une sorte de coussin articulé sur le support autour du bord inférieur de ce dernier. Lorsqu'il est emboîté sur ce dernier, il présente vers l'avant une de ses faces qui forme appui-tête pour un occupant adulte. En cet état, la complémentarité des formes extérieures du support d'avec celles de l'intérieur et de l'extérieur du rabat fait qu'on ne distingue pas de différence d'avec un appui-tête classique.

Les joues permettent le maintien latéral de la tête de l'enfant. Ce maintien est évidemment utile en cas de choc latéral, mais il procure en outre un meilleur confort, en particulier en cas de sommeil.

On notera que l'on peut prévoir un système de verrouillage en cette position afin d'éviter tout déploiement intempestif du rabat lors d'un accident ou tout simplement en roulage. Accessoirement, la complémentarité des formes pourra jouer un rôle dans ce verrouillage par l'élasticité des joues latérales.

Lorsque au contraire le rabat est déployé vers le bas, l'autre face du rabat est dirigée vers l'avant et forme un appui-tête pour un enfant. On comprend que la position basse de l'axe de pivotement du rabat permet à ce dernier de venir satisfaire le plus petit des enfants concernés.

Dans un mode de réalisation particulier, l'appui-tête selon l'invention comprend au moins une broche de montage sur le dossier d'un siège, ledit support étant monté à une extrémité de ladite broche.

Le montage de la broche sur le siège est de préférence coulissant. L'appui-tête est ainsi réglable en hauteur en utilisation adulte et enfant.

Dans un mode de réalisation particulier, lesdites joues latérales s'étendent essentiellement à partir de la zone du corps d'appui qui se trouve en partie basse lorsque le rabat est en position basse d'utilisation par un enfant.

Un tel agencement est susceptible d'assurer un soutien amélioré tout en garantissant le confort visuel de l'enfant. Ces formes très proches du cou de l'enfant sont en effet capables, lorsque la tête de l'enfant bascule sur son épaule, de s'intercaler entre ces parties du corps en formant coussin, bloquant ainsi tout mouvement latéral et vertical de la tête de l'enfant.

Egalement dans un mode de réalisation particulier, l'appui-tête comporte au moins un guide de sangle de sécurité monté sur ledit rabat.

Ce guide de ceinture ou de harnais de sécurité permet de guider les sangles sur les épaules de l'enfant afin d'amener ces dernières à passer en travers du corps de l'enfant au niveau du torse et non pas au niveau du cou.

Plus particulièrement, le guide de ceinture de sécurité peut être monté sur lesdites joues latérales.

En effet les possibilités de réglage en hauteur du dispositif permettent de placer les joues immédiatement au-dessus des épaules de l'enfant. Elles sont donc en position optimale pour garantir le trajet le plus direct possible des ceintures de sécurité à trois points d'ancrage et pour maintenir l'écartement des sangles de harnais quatre points et plus.

Ledit support peut présenter une section longitudinale en L, de manière à s'adapter aux faces avant et de dessus d'une structure de montage telle que la partie supérieure du dossier du siège.

La partie des joues latérales dudit rabat en saillie de la surface d'appui-tête pour enfant peut présenter, en vue de côté, une forme sensiblement identique à celle dudit support.

La surface d'appui-tête pour adulte dudit rabat peut être sensiblement complémentaire de la face avant dudit support.

Dans un mode de réalisation particulier, la partie d'appui-tête formant support comporte des moyens de réglage en hauteur de l'articulation du rabat, augmentant ainsi les possibilités de positionnement correct du rabat.

Plus particulièrement, lesdits moyens de réglage peuvent comprendre des moyens de mémorisation de la position d'utilisation enfant.

L'utilisation du rabat permet donc d'envisager d'asseoir les enfants de toute taille directement sur le siège puisque la surface d'appui-tête est alors décalée vers le bas, au niveau du dossier de la banquette. L'appui-tête selon l'invention devient donc un des éléments participatifs essentiels du système de retenue d'un enfant.

On décrira maintenant, à titre d'exemple non limitatif, plusieurs modes de réalisation particuliers de l'invention, en référence aux dessins schématiques annexés dans lesquels :
- la figure 1 est une vue en perspective d'un appui-tête selon l'invention en position adulte ;
- la figure 2 est une vue en perspective de cet appui-tête en position enfant ;
- la figure 3 en est une vue en coupe longitudinale du même appui-tête ;
- la figure 4 est une vue en perspective d'un autre mode de réalisation l'appui-tête qui selon l'invention comporte des moyens de réglage supplémentaires en position enfant ;
- la figure 5 est une vue en perspective d'un autre mode de réalisation de l'appui-tête comportant d'autres moyens de réglage toujours en position enfant ; et
- la figure 6 est une vue de face d'un des modes de réalisation de l'appui-tête, qui selon l'invention permet de mémoriser le réglage du rabat, en position intermédiaire.

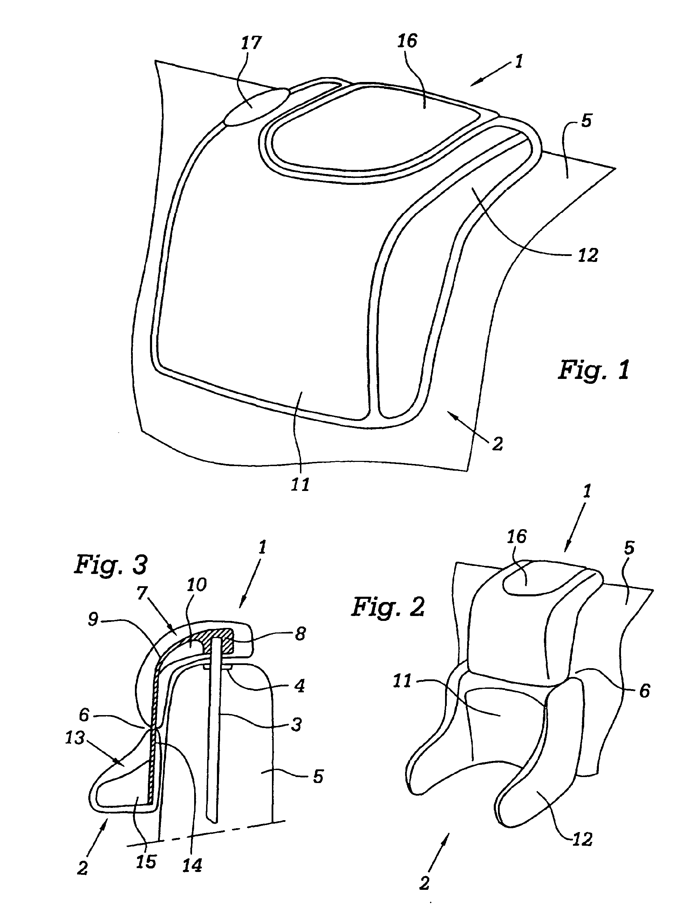

L'appui-tête des figures 1 à 3 est constitué pour l'essentiel de deux parties, un support 1 et un rabat 2. Le support 1 est monté à l'extrémité supérieure de deux broches 3 coulissantes dans des douilles 4 à la partie supérieure du dossier 5 d'une banquette arrière de véhicule automobile.

Le support 1 et le rabat 2 présentent un bord horizontal commun au niveau duquel ils sont articulés par tout moyen convenable formant une charnière 6. Ce bord commun est le bord inférieur pour le support 1 et se trouve soit à la partie haute soit à la partie basse du rabat 2 selon sa position.

Cette position peut être soit une position haute, correspondant à une utilisation de l'appui-tête par un adulte, soit une position basse pour une utilisation de l'appui-tête par un enfant. Le passage d'une position à l'autre s'effectue par une rotation du rabat d'environ 180° autour de la charnière 6.

Le support 1 et le rabat 2 présentent tous deux en vue de côté une forme de L de sorte que, lorsque le rabat 2 est en position haute, aussi bien le support que le rabat épousent sensiblement la forme du dessus du dossier 5.

Le support 1 présente une section longitudinale sensiblement constante en forme de L. Il comporte une armature 7 en matière plastique comprenant un massif 8 d'ancrage des broches 3, un voile 9 recourbé vers le bas, et des nervures 10 de rigidification.

Le rabat comporte un corps d'appui 11 et deux joues latérales 12 qui s'étendent, à partir des bords du corps d'appui adjacents à la charnière 6, vers l'avant lorsque le rabat 2 est en position basse. En fait, les joues 10 s'étendent vers l'avant essentiellement dans la partie basse du rabat (lorsqu'il est en position basse), ce qui lui donne sa forme en L en vue de côté.

Le rabat 2 comporte également une armature en matière plastique 13 composée d'un voile 14 et de deux plaques 15 d'armature des joues latérales 12.

Le support 1 et le rabat 2 comportent, autour de leur armature respective, une garniture en mousse et un revêtement textile. Leur charnière peut d'ailleurs se limiter à ce revêtement textile.

La partie supérieure 16 du support 1 possède une forme complémentaire de l'espace compris entre le corps 11 et les joues 12 du rabat. Ainsi, lorsque le rabat est en position haute, l'ensemble présente l'aspect d'un appui tête classique. La face du corps 11 opposée aux joues 12 est alors tournée vers l'avant et sert de surface d'appui-tête pour un adulte.

Lorsque le rabat est déplié vers le bas, l'autre face du corps 11 est tournée vers l'avant, et sert de surface d'appui-tête pour un enfant. Les joues 12 assurent alors le maintien latéral de la tête de l'enfant.

On observera qu'une des joues supporte un guide 17 de sangle de sécurité. Ce guide peut être constitué d'une simple barrette fixée à la joue à une de ses extrémités et ayant son autre extrémité libre pour le passage de la sangle.

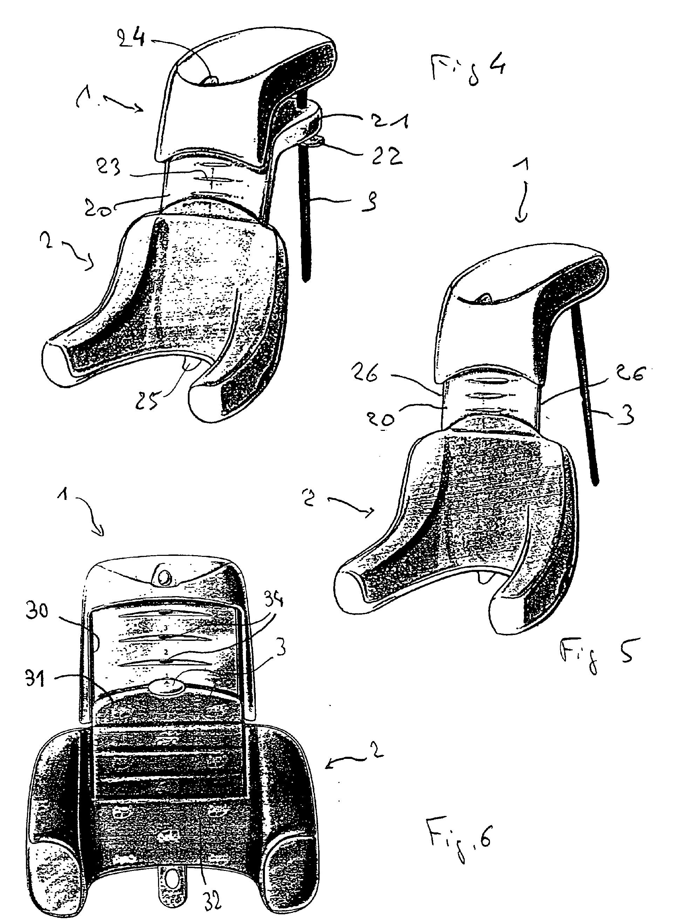

Dans les modes de réalisation des figures 4 et 5, l'articulation du rabat 2 sur le support 1 est effectuée par l'intermédiaire d'une palette 20, c'est-à-dire que l'axe de rotation est prévu entre la partie haute (sur la figure) du rabat 2 et la palette 20.

Dans le mode de réalisation de la figure 4, cette palette 20 forme à sa partie supérieure un bourrelet 21 muni d'orifices dans lesquels sont engagées les broches 3.

Des moyens de blocage convenables 22 sont prévus pour bloquer la palette en hauteur, ou pour la débloquer pour permettre son réglage. Un marquage 23 sur la palette 20 permet de visualiser la taille de l'enfant à laquelle le réglage est adapté.

Cet appui-tête comprend en outre des moyens complémentaires 24, 25 pour le verrouiller dans sa position d'utilisation par un adulte.

Dans le mode de réalisation de la figure 5, les bords 26 de la palette 20 sont agencés pour coulisser dans une glissière (non représentée) solidaire du support 1. Tout moyen de blocage en hauteur convenable peut également être prévu.

Dans le mode de réalisation de la figure 6, l'articulation du rabat 2 sur le support 1 est effectuée par l'intermédiaire d'un chariot (non représenté) monté coulissant dans des glissières 30 solidaire de la face

Une bavette souple 31 est fixée en 32 environ à mi-hauteur de la surface d'appui pour enfant et dépasse de la partie supérieure (sur la figure) du rabat 2. La bavette 31 comporte à sa partie supérieure un moyen de fixation 33 susceptible de coopérer avec une pluralité de moyens complémentaires 34 sur la face avant du support 1.

Le moyen complémentaire particulier 34 sur lequel est fixé le moyen de fixation 33 détermine donc la hauteur du rabat 2 lorsqu'il est en position enfant. Lorsqu'on fait pivoter le rabat 2 par rapport au chariot pour le remettre en position adulte, le chariot revient dans sa position la plus basse et le rabat s'emboîte de façon convenable sur le support 1.

## Revendications

1. - Appui-tête convertible pour une utilisation par un enfant ou un adulte, notamment dans un véhicule automobile comprenant un support (1) et un rabat (2) articulé sur le support (1) autour d'un axe (6) sensiblement horizontal situé au bord inférieur du support (1), ledit rabat (2) étant déplaçable d'une position haute d'utilisation par un adulte à une position basse d'utilisation par un enfant, ledit rabat (2) comportant un corps d'appui (11) généralement plat présentant sur une de ses faces une surface d'appui-tête pour adulte et sur son autre face une surface d'appui-tête pour enfant, **caractérisé par le fait que** ledit rabat (2) comporte deux joues latérales (12) sensiblement verticales s'étendant à partir des bords du corps d'appui (11) du côté de sa face présentant la surface d'appui-tête pour enfant, et **par le fait que** le corps d'appui (11) et les deux joues latérales (12) sont complémentaires dudit support (1) de manière à s'emboîter autour du support lorsque le rabat (2) est en position haute d'utilisation par un adulte.

2. - Appui-tête selon la revendication 1 comprenant au moins une broche de montage (3) sur le dossier (5) d'un siège, ledit support (1) étant monté à une extrémité de ladite broche (3).

3. - Appui-tête selon l'une quelconque des revendications 1 et 2, dans lequel lesdites joues latérales (12) s'étendent essentiellement à partir de la zone du corps d'appui (11) qui se trouve en partie basse lorsque le rabat (2) est en position basse d'utilisation par un enfant.

4. - Appui-tête selon l'une quelconque des revendications 1 à 3, comportant au moins un guide (17) de sangle de sécurité monté sur ledit rabat (2).

5. - Appui-tête selon la revendication 4, dans lequel le guide (17) de sangle de sécurité est monté sur lesdites joues latérales (12).

6. - Appui-tête selon l'une quelconque des revendications 1 à 5, dans lequel ledit support (1) présente une section longitudinale en L, de manière à s'adapter aux faces avant et de dessus d'une structure de montage (5).

7. - Appui-tête selon l'une quelconque des revendications 1 à 6, dans lequel la partie des joues latérales (12) dudit rabat (2) en saillie de la surface d'appui-tête pour enfant présente, en vue de côté, une forme sensiblement identique à celle dudit support (1).

8. - Appui-tête selon l'une quelconque des revendications 1 à 7, dans lequel la surface d'appui-tête pour adulte dudit rabat (2) est sensiblement complémentaire de la face avant dudit support (1).

9. - Appui-tête selon l'une quelconque des revendications 1 à 8, dans lequel la partie d'appui-tête formant support comporte des moyens de réglage en hauteur de l'articulation du rabat (2).

10. - Appui-tête selon la revendication 9, dans lequel lesdits moyens de réglage comprennent des moyens de mémorisation (23) de la position d'utilisation enfant.

## Claims

1. A convertible headrest for a use by a child or an adult, in particular in a motor vehicle, including a support (1) and a flap (2) hinged on the support (1), around a substantially horizontal axis (6) located at the lower edge of the support (1), said flap (2) being movable from a high position of use by an adult to a low position of use by a child, said flap (2) comprising a generally flat support body (11) having on one of its faces a headrest surface for adult and on its other face a headrest surface for child, **characterised by** the fact that said flap (2) comprises two substantially vertical lateral panels (12) extending from the edges of the support body (11) on the side of its face having the headrest surface for child, and by the fact that the support body (11) and the two lateral panels (12) are complementary of said support (1) in order to fit around the support when the flap (2) is in high position of use by an adult.

2. A headrest according to claim 1, including at least one mounting pin (3) on the back (5) of a seat, said support (1) being mounted at the end of said pin (3).

3. A headrest according to any one of claims 1 and 2, wherein said lateral panels (12) extend essentially from the area of the support body (11) which is located in the bottom part when the flap (2) is in low position of use by a child.

4. A headrest according to any one of claims 1 to 3, comprising at least one seat belt guide (17) mounted on said flap (2).

5. A headrest according to claim 4, wherein the seat belt guide (17) is mounted on said lateral panels (12).

6. A headrest according to any one of claims 1 to 5, wherein said support (1) has an L-shaped longitudinal section, in order to be adapted to the front and rear faces of a mount structure (5).

7. A headrest according to any one of claims 1 to 6, wherein the part of the lateral panels (12) of said flap (2) projecting from the headrest surface for child has, in side view, a shape substantially identical to that of said support (1).

8. A headrest according to any one of claims 1 to 7, wherein the headrest surface for adult of said flap (2) is substantially complimentary of the front face of said support (1).

9. A headrest according to any one of claims 1 to 8, wherein the headrest part forming support comprises means of adjustment in height of the hinging of the flap (2).

10. The headrest according to claim 9, wherein said means of adjustment include means of memorization (23) of the position of use for child.

## Patentansprüche

1. Konvertible Kopfstütze für eine Verwendung durch ein Kind oder einen Erwachsenen, insbesondere in einem Kraftfahrzeug, umfassend einen Träger (1) und eine Klappe (2), die gelenkig ist am Träger (1) um eine Achse (6), die im Wesentlichen horizontal ist, am unteren Rand des Trägers (1), wobei die genannte Klappe (2) verschiebbar ist von einer oberen Position zur Verwendung durch einen Erwachsenen zu einer unteren Position zur Verwendung durch ein Kind, wobei die Klappe (2) einen Stützkörper (11) aufweist, der im Allgemeinen flach ist und an einer seiner Seiten eine Kopfstützenoberfläche für Erwachsene und an seiner anderen Seite eine Kopfstützenoberfläche für Kinder aufweist, **dadurch gekennzeichnet, dass** die genannte Klappe (2) zwei seitliche Wangen (12) aufweist, die im Wesentlichen vertikal sind und die sich ab den Rändern des Stützkörpers (11) an der Seite erstrecken, die über eine Kopfstützenoberfläche für Kinder verfügt, und dadurch, dass der Stützkörper (11) und die beiden seitlichen Wangen (12) derart den Träger (1) ergänzen, dass sie um den Träger einrasten, wenn sich die Klappe (2) in der oberen Position zur Verwendung durch einen Erwachsenen befindet.

2. Kopfstütze nach Anspruch 1, umfassend zumindest einen Stift zur Montage (3) an der Lehne (5) eines Sitzes, wobei der genannte Träger (1) an einem Ende von dem genannten Stift (3) montiert ist.

3. Kopfstütze nach einem der Ansprüche 1 und 2, in der sich die genannten seitlichen Wangen (12) hauptsächlich ab dem Bereich des Stützkörpers (11) erstrecken, der sie im unteren Teil befindet, wenn sich die Klappe (2) in der unteren Position zur Verwendung durch ein Kind befindet.

4. Kopfstütze nach einem der Ansprüche 1 bis 3, umfassend zumindest einen Führer (17) für den Sicherheitsgurt, der auf der genannten Klappe (2) montiert ist.

5. Kopfstütze nach Anspruch 4, in der der Führer (17) des Sicherheitsgurts an den genannten seitlichen Wangen (12) montiert ist.

6. Kopfstütze nach einem der Ansprüche 1 bis 5, in der der genannte Träger (1) derart einen L-förmigen Längsquerschnitt aufweist, dass er sich an die vorderen und oberen Seiten einer Montagestruktur (5) anpasst.

7. Kopfstütze nach einem der Ansprüche 1 bis 6, in der der Teil der seitlichen Wangen (12) der genannten Klappe (2), die aus der Kopfstützenoberfläche für Kinder herausragt, von der Seitenansicht aus gesehen eine Form aufweist, die im Wesentlichen derjenigen von dem genannten Träger (1) entspricht.

8. Kopfstütze nach einem der Ansprüche 1 bis 7, in der die Kopfstützenoberfläche für Erwachsene der genannten Klappe (2) im Wesentlichen die Vorderseite des genannten Trägers (1) ergänzt.

9. Kopfstütze nach einem der Ansprüche 1 bis 8, in der der Teil der Kopfstütze, der den Träger bildet, Mittel zur Höheneinstellung der Gelenkverbindung der Klappe (2) aufweist.

10. Kopfstütze nach Anspruch 9, in der die genannten Mittel zur Einstellung Mittel zur Speicherung (23) der Position zur Verwendung durch ein Kind aufweist.
